# EUROPEAN PATENT SPECIFICATION

(11) **EP 2 653 411 B1**
(45) Date of publication and mention of the grant of the patent: **19.11.2014**
(21) Application number: 13158557.2
(22) Date of filing: 11.03.2013
(51) Int. Cl.: B65G 17/08

(54) **Conveyor belt**
Förderband
Bande transporteuse

(30) Priority: 18.04.2012 JP 2012094757
(43) Date of publication of application: 23.10.2013
(73) Proprietor: Tsubakimoto Chain Co., Kita-ku Osaka 530-0005 (JP)
(72) Inventor: Ozaki, Hajime, Osaka, 530-0005 (JP)
(74) Representative: Loock, Jan Pieter

(56) References cited:
- EP-A1- 0 493 349
- EP-A2- 2 014 585
- EP-B1- 1 751 037

## Description

### Field of the Invention

The invention relates to a conveyor belt configured by multiple synthetic-resin modular links interconnected to each other in an endless manner using a connecting pin so that a conveyed article is placed and conveyed on a conveying surface provided on an outer circumference of the conveyor belt.

### Description of the Related Art

Traditionally, a conveyor belt is known that includes multiple modular links made of synthetic-resin and interconnected to each other, using a connecting pin, in a direction defined by a length of the conveyor belt (referred to as a "belt longitudinal direction" or simply as "longitudinally" hereinafter) the modular links being made of synthetic resin and each including a plurality of boss sections each having an insertion hole adapted to receive the connecting pin, the boss sections being provided at both a leading end and a trailing end of the modular link in a staggered pattern (for example, see PTL 1).

A conveyor belt having a first conventional configuration as described in PTL 1 incorporates, for example, such a tab attachment as shown in FIG. 6, and is configured to prevent uplifting due to tensile force of the conveyor belt in a concavely curved zone of a circulation route of the conveyor belt when viewed from one side thereof, the uplift prevention being provided by bringing a guide-engaging section of the tab attachment into engagement with an uplift-preventing guide rail provided in the circulation route.

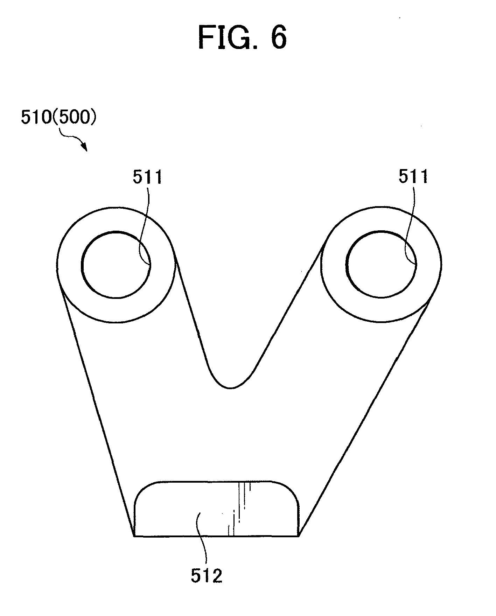

FIG. 6 is a side view of the tab attachment adapted to be attached to a conveyor belt 500 (not shown specifically) having the first conventional configuration. As shown in FIG. 6, the conventional tab attachment 510 includes two pin holes 511, 511 provided frontward and rearward in the belt conveying direction, respectively, each adapted to receive a connecting pin therein, and an engaging section 512 provided closer to an inner circumference of the belt than these two pin holes 511, 511.

Further, the pin holes 511, 511 are placed at a part of the modular link obtained by machining, i.e., eliminating, one boss section therefrom, and, in place of a pin insertion hole of the one boss section that has been eliminated, connecting pins are inserted into and passed through the pin holes 511, 511, respectively, to attach the tab attachment 510 to the conveyor belt 500.

Also, in a conveyor belt having a second conventional configuration as described in PTL 2, a guide-engaging section is integrally provided with a modular link that defines a full width of the belt.

### Citations List

### Patent Literature

PTL 1: Japanese Patent Application Laid-Open Publication No. 2004-262600
PTL 2: Japanese Unexamined Patent Application Publication (Translation of PCT Application) No.2007-537113 = EP 1 751 037

A downside to the conveyor belt 500 having the above-described first conventional configuration, however, is that the two pin holes 511, 511 of the tab attachment provided longitudinally frontward and rearward are connected to each other in a V-shape when viewed in their side view in the absence of a substantial link member connecting and extending linearly between the two pin holes 511, 511, and such a structure may lead to decrease in a tensile strength of the entire conveyor belt 500, for the number of substantial links is reduced in the conveyor belt 500 as a whole.

Further, another downside is that in a case where the boss sections of the modular link are arranged in a staggered pattern and positional relationship of the two pin holes 511, 511 differs in a transverse direction defined by a width of the belt (referred to as a"belt width direction" hereinafter), the tab attachment will take an asymmetrical shape with reference to the belt longitudinal direction. Given this structure, the tab attachment 510 may be deformed in the belt width direction.

Also, still another downside found in the conveyor belt having the above-described second configuration that it has a structure where the guide-engaging section is fixed to a specific portion of one modular link defining the full width of the belt, making it difficult to accommodate different desired positions of the guide-engaging section in the belt width direction.

In view of the above, the invention addresses the above-identified problems not addressed by the prior art, and accordingly an object of the invention is to provide a conveyor belt that prevents decrease in a tensile strength of the entire conveyor belt and deformation of a modular link in the belt width direction, the modular link having an engaging portion adapted to be brought into engagement with an uplift-preventing guide, and allows for simple incorporation of the modular link having the engaging portion into the conveyor belt at a desired position and in any desired combination.

### SUMMARY OF THE INVENTION

A first aspect of the invention provides a conveyor belt configured by multiple modular links arranged in an endless manner in a belt longitudinal direction and interconnected to each other using a connecting pin so as to provide an outer circumference of the conveyor belt upon which a conveyed article is placed and conveyed, the modular links being made of synthetic resin and each including a plurality of boss sections each having an insertion hole adapted for insertion of the connecting pin, the boss sections being provided in a belt width direction and arranged in a staggered pattern at both a leading end and a trailing end of the of the modular links.

The modular links comprise two types of modular links, i.e., (A) a plurality of modular links having no guide-engaging section adapted to be brought into engagement with a guide rail of a circulation route, the guide rail being adapted for prevention of uplifting of the conveyor belt, each having a conveying surface on the outer circumference of the conveyor belt, and (B) a modular link with the guide-engaging section, having the conveying surface on the outer circumference of the conveyor belt, and arranged between the modular links without the guide-engaging section in the belt width direction.

The modular link with the guide-engaging section comprises (a) a link base having the conveying surface, (b) the guide-engaging section provided on an inner circumference side of the conveyor belt with respect to the link base and adapted to be brought into engagement with the guide rail of the circulation route, (c) two first pin holes provided in the link base at one end thereof in the belt longitudinal direction and adapted to receive the connecting pin in the belt width direction, and (d) one second pin hole arranged on the link base on a side of an other end in the belt longitudinal direction and adapted to receive the connecting pin in the belt width direction.

The two first pin holes are provided away from each other in the belt width direction, and the second pin hole is provided at a position between the two first pin holes in the belt width direction. This configuration provides solution to the above-described problems.

In the invention according to a second aspect of the invention, in addition to the configuration described with regard to the first aspect, the cross-sectional area of the second hinge section providing the second pin hole viewed in the belt longitudinal direction is equal to the sum of the cross-sectional areas of the two first hinge sections each providing one of the two first pin holes taken in the belt longitudinal direction. This additional feature further provides solution to the above-described problems.

In the invention according to a third aspect of the invention, in addition to the configuration described with regard to the first aspect, the cross-sectional area of the link base taken in the belt longitudinal direction between the first pin holes and the second pin hole is equal to the cross-sectional area of the portion of the modular link without the guide-engaging section taken in the belt longitudinal direction, the portion being defined such that the portion has the same width as that of the link base. This additional feature further provides solution to the above-described problem.

As described above, the conveyor belt of the invention includes the modular links arranged and interconnected to each other in the belt longitudinal direction using the connecting pin, the modular links being made of synthetic resin and each including the boss sections each having the insertion hole, the boss sections being provided in the belt width direction and arranged in the staggered pattern at the leading and trailing ends of the of the modular links. By this configuration, it is made possible to configure the conveyor belt in an endless manner so that the conveyed article is allowed to be carried upon the side of the belt outer circumference, in addition to which the following specific effects are obtained.

In the context of the conveyor belt according to the first aspect of the invention, the modular links comprise the two types of modular links, i.e., (A) the modular links without the guide-engaging section adapted to be brought into engagement with the guide rail of the circulation route, the guide rail being adapted for prevention of uplifting of the conveyor belt, each having the conveying surface on the outer circumference of the conveyor belt, and (B) the modular link with the guide-engaging section, having the conveying surface on the outer circumference of the conveyor belt, and arranged between the modular links without the guide-engaging section in the belt width direction. The modular link with the guide-engaging section comprises (a) the link base having the conveying surface, (b) the guide-engaging section provided on the inner circumference side of the conveyor belt with respect to the link base and adapted to be brought into engagement with the guide rail of the circulation route, (c) two first pin holes provided in the link base at the one end thereof in the belt longitudinal direction and adapted to receive the connecting pin in the belt width direction, and (d) the one second pin hole arranged on the link base at the other end in the belt longitudinal direction and adapted to receive the connecting pin in the belt width direction. The two first pin holes are provided away from each other in the belt width direction and the second pin hole is provided at a position between the two first pin holes in the belt width direction. By virtue of this configuration, the number of substantial links does not decrease, the links comprising the modular links without the guide-engaging section and the link base of the modular link with the guide-engaging section, which makes it possible to prevent decrease in the tensile strength across the conveyor belt.

Further, since the portion of the modular link with the guide-engaging section on which the tensile force is exerted is made symmetrical with respect to the conveying direction, it is made possible to prevent deformation of the modular link with the guide-engaging section in the belt width direction. Also, it is made possible to incorporate the modular link with the guide-engaging section and the modular links without the guide-engaging section into the conveyor belt in any desired combination, which allows for simple incorporation of the modular link with the guide-engaging section into the conveyor belt at a desired position and in a desired combination.

In the context of the conveyor belt according to the second aspect of the invention, in addition to the effects obtained by the invention of the first aspect, since the cross-sectional area of the second hinge section providing the second pin hole viewed in the belt longitudinal direction is made equal to the sum of the cross-sectional areas of the two first hinge sections each providing the first pin hole viewed in the belt longitudinal direction, the strength of the first hinge section is made equal to the strength of the second hinge section, making it possible to eliminate unnecessity in the modular link with the guide-engaging section.

In the context of the conveyor belt according to the third aspect of the invention, in addition to the effects obtained by the invention of the first aspect, the cross-sectional area of the link base taken in the belt longitudinal direction between the first pin holes and the second pin hole is equal to the cross-sectional area of the portion of the modular link without the guide-engaging section taken in the belt longitudinal direction, the portion being defined such that the portion has the same width as that of the link base. Thus, the tensile strength between the first hinge section and the second hinge section in the modular link with the guide-engaging section is made substantially equal to the tensile strength of the corresponding portion between the hinge sections of the modular links without the guide-engaging section, the corresponding portion having the same width as that of the link base. This additional feature makes it possible to eliminate or reduce or unevenness in the tensile strength across the entire conveyor belt.

### BRIEF DESCRIPTION OF THE DRAWINGS

FIG. 1 is a side view of a schematic representation of a conveyor apparatus in accordance with an embodiment of the invention;
FIG. 2 is a perspective view of a conveyor belt of the conveyor apparatus in accordance with an embodiment of the invention;
FIG. 3 is a perspective view of a modular link having a guide-engaging section in accordance with an embodiment of the invention, the guide-engaging section being adapted to be brought into engagement with an uplift-preventing guide;
FIG. 4A is a plan view of the modular link having the guide-engaging section in accordance with an embodiment of the invention, the guide-engaging section being adapted to be brought into engagement with the uplift-preventing guide;
FIG. 4B is a side view taken in a direction indicated by an arrow 4B of FIG. 4A;
FIG. 4C is a cross-sectional view taken along a line 4C-4C of FIG. 4B;
FIG. 4D is a cross-sectional view taken along a line 4D-4D of FIG. 4B;
FIG. 5A is a side view of the modular link having the guide-engaging section adapted to be brought into engagement with the uplift-preventing guide;
FIG. 5B is a cross-sectional view taken along a line 5B-5B of FIG. 5A;
FIG. 5C is a side view of a modular link having no guide-engaging section adapted to be brought into engagement with the uplift-preventing guide, the modular link having a length in a belt width direction equal to one pitch of boss section;
FIG. 5D is a cross-sectional view taken along a line 5D-5D of FIG. 5C; and
FIG. 6 is a side view of a tab attachment adapted to be attached to a conveyor belt having a first conventional configuration.

### DETAILED DESCRIPTION OF THE EXEMPLARY EMBODIMENTS

The invention provides a conveyor belt configured by multiple modular links arranged in an endless manner and interconnected to each other using a connecting pin in a belt longitudinal direction to provide an outer circumference of the conveyor belt upon which a conveyed article is placed and conveyed.

The modular links are made of synthetic resin and each includes a plurality of boss sections. The boss sections each include an insertion hole adapted for receiving the connecting pin therein. The boss sections are provided at both a leading end and a trailing end of the modular link in a staggered pattern in a belt width direction.

The modular links comprise two types of modular links, i.e., (A) a plurality of modular links that have no uplift-preventing guide-engaging section adapted to be brought into engagement with an uplift-preventing guiderail, each having a conveying surface on the belt outer circumference, and (B) a modular link that has the engaging portion adapted to be brought into engagement with the uplift-preventing guide rail, having a conveying surface on the belt outer circumference, and being arranged between the modular links without the guide-engaging section in the belt width direction.

The modular link with the guide-engaging section comprises a link base having the conveying surface; the guide-engaging section provided on an inner circumference side of the conveyor belt with respect to the link base and adapted to be brought into engagement with the uplift-preventing guide rail of a circulation route.

The two first pin holes are provided on the link base on a side of one end in the belt longitudinal direction and adapted to receive the connecting pin in the belt width direction, and one second pin hole is provided in the link base at the other end in the belt longitudinal direction and adapted to receive the connecting pin therein in the belt width direction.

The two first pin holes are provided away from each other in the belt width direction, and the second pin hole is arranged at a position between the two first pin holes in the belt width direction.

Any specific embodiments are envisaged as long as the above configuration is included, making it possible to prevent decrease in a tensile strength of the entire conveyor belt and deformation of the modular link having the guide-engaging section in the belt width direction, and allow for simple incorporation of the modular link having the guide-engaging section into the conveyor belt at a desired position and in any desired combination.

Also, the invention provides a conveyor apparatus that includes (A) a conveyor belt configured by multiple modular links arranged in an endless manner and interconnected to each other using a connecting pin in a belt longitudinal direction to provide an outer circumference of the conveyor belt upon which a conveyed article is placed and conveyed, the modular links being made of synthetic resin, and each including a plurality of boss sections each including an insertion hole adapted for receiving the connecting pin therein, the boss sections being provided at both a leading end and a trailing end of the modular link in a staggered pattern in a belt width direction; (B) a sprocket adapted to be in meshing engagement with and wrapped by the conveyor belt; and (C) an uplift-preventing guide rail arranged along the circulation route of the conveyor belt and adapted to be brought into engagement with an uplift-preventing guide-engaging section provided on an inner circumference of the conveyor belt.

The modular links comprise two types of modular links, i.e., (a) a plurality of modular links that do not have an uplift-preventing guide-engaging section adapted to be brought into engagement with an uplift-preventing guiderail, each having a conveying surface on the belt outer circumference, and (b) a modular link that has the engaging portion adapted to be brought into engagement with the uplift-preventing guide rail, having a conveying surface on the belt outer circumference, and being arranged between the modular links without the guide-engaging section in the belt width direction.

The modular link with the guide-engaging section comprises a link base having the conveying surface; the guide-engaging section provided on the side of an inner circumference of the conveyor belt with respect to the link base and adapted to be brought into engagement with the uplift-preventing guide rail of a circulation route.

The two first pin holes are provided on the link base on a side of one end in the belt longitudinal direction and adapted to receive the connecting pin in the belt width direction, and one second pin hole is provided in the link base at the other end in the belt longitudinal direction and adapted to receive the connecting pin therein in the belt width direction.

The two first pin holes are provided away from each other in the belt width direction, and the second pin hole is arranged at a position between the two first pin holes in the belt width direction.

Any specific embodiments are envisaged as long as the above configuration is included, making it possible to prevent decrease in a tensile strength of the entire conveyor belt and deformation of the modular link having the guide-engaging section in the belt width direction, and allow for simple incorporation of the modular link having the guide-engaging section into the conveyor belt at a desired position and in any desired combination.

For example, the conveyor belt may comprise any conveyor belt configured by multiple synthetic-resin modular links that are interconnected to each other in the belt longitudinal direction via connecting pins, and one modular link without the guide-engaging section may be increased in length in the belt width direction, while the other modular link without the guide-engaging section may be decreased in length in the belt width direction, and these two modular links may be incorporated into the conveyor belt in any desired combination.

The material for use in making the components of the conveyor belt including the modular link may comprise synthetic resin such as polypropylene, polyethylene, acetal, and nylon.

Further, the modular links without the guide-engaging section may be arranged in the belt width direction to configure a wide belt, and the modular links with the guide-engaging section may likewise be arranged in the width direction.

### An Exemplary Embodiment

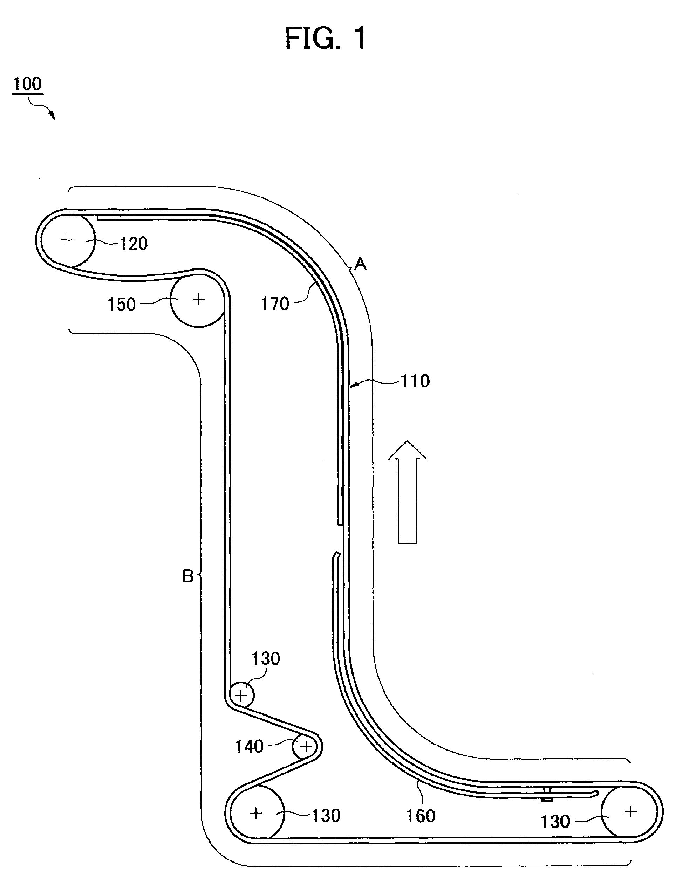

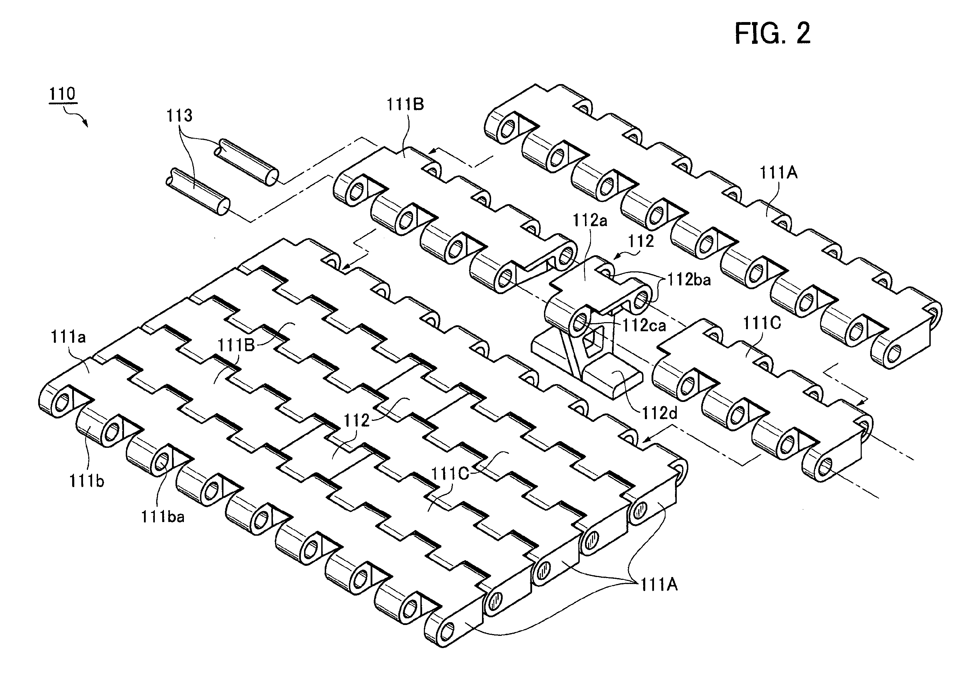

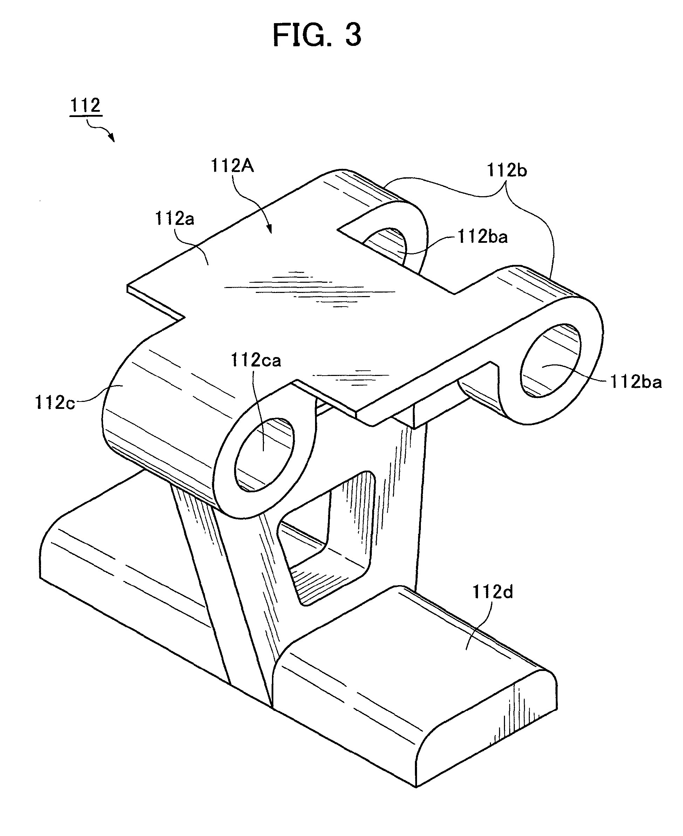

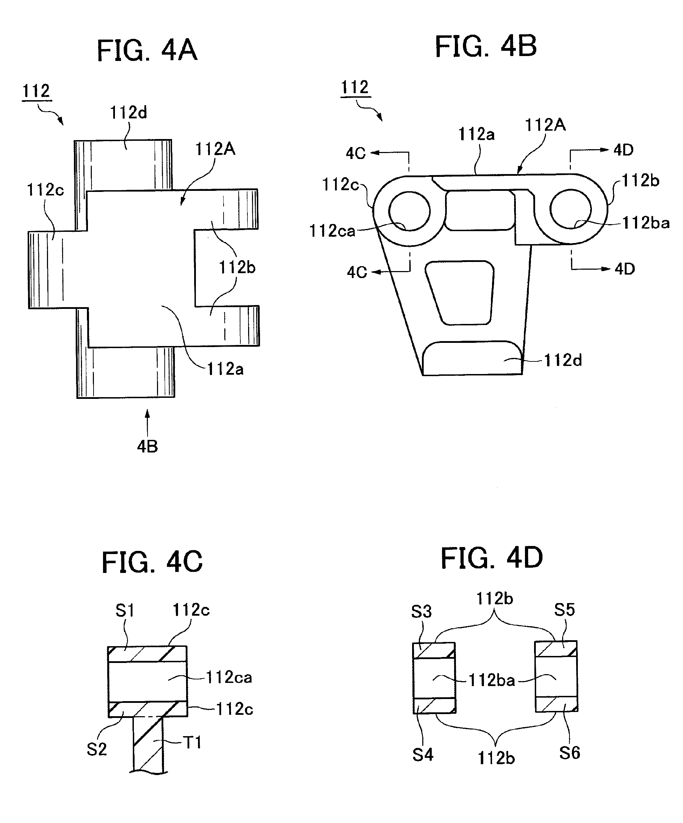

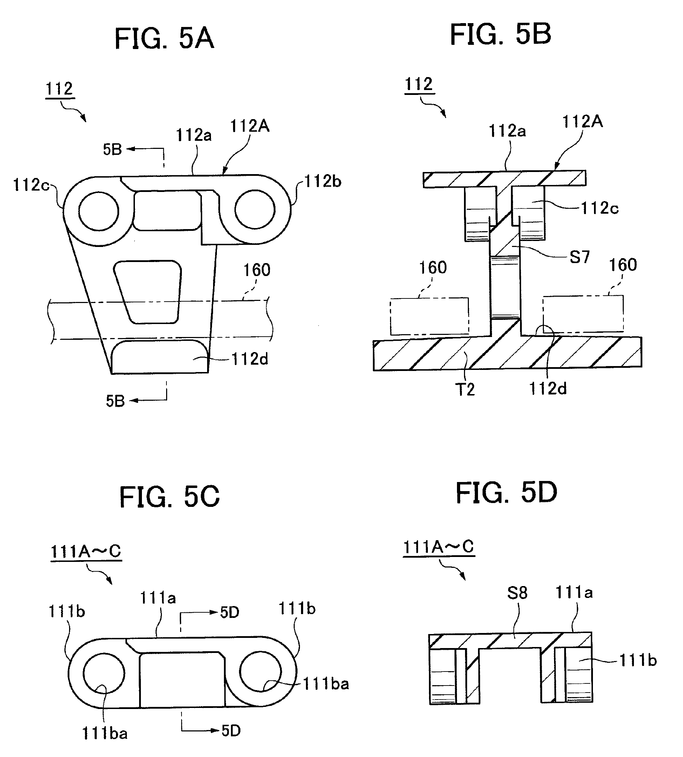

A conveyor apparatus 100 according to an exemplary embodiment of the invention will now be described with reference to FIGS. 1-5D, in which: FIG. 1 is a side view of a schematic representation of the conveyor apparatus 100 in accordance with an embodiment of the invention; FIG. 2 is a perspective view of a conveyor belt 110 of the conveyor apparatus 100 in accordance with the embodiment of the invention; FIG. 3 is a perspective view of a modular link 112 with a guide-engaging section in accordance with the embodiment of the invention; FIG. 4A is a plan view of a modular link 112 with the guide-engaging section of the conveyor belt 110 in accordance with the embodiment of the invention; FIG. 4B is a side view taken in a direction indicated by an arrow 4B in FIG. 4A; FIG. 4C is a cross-sectional view taken along a line 4C-4C of FIG. 4B; FIG. 4D is a cross-sectional view taken along a line 4D-4D of FIG. 4B; FIG. 5A is a side view of the modular link 112 with the guide-engaging section; FIG. 5B is a cross-sectional view taken along a line 5B-5B of FIG. 5A; FIG. 5C is a side view of a modular links 111A to 111C having no guide-engaging section and having a length in a belt width direction equal to one pitch of boss section; and FIG. 5D is a cross-sectional view taken along a line 5D-5D of FIG. 5C.

Referring to FIGS. 1-5D, there is shown the conveyor apparatus 100 according to the exemplary embodiment of the invention that includes (A) an endless conveyor belt 110 configured by multiple modular links (111A to 111C, 112) arranged in an endless manner and interconnected to each other using a connecting pin 113 in a belt longitudinal direction to provide conveying surfaces 111a, 112a on an outer circumference of the conveyor belt 110 upon which a conveyed article (not shown) is placed and conveyed, the modular links being made of synthetic resin; (B) a drive sprocket 120 and driven sprockets 130, 130..., which are sprockets adapted to be in meshing engagement with and wrapped by the conveyor belt 110; and (C) an uplift-preventing guide rail 160 arranged along a circulation route of the conveyor belt 110 and adapted to be brought into engagement with an uplift-preventing guide-engaging section 112d provided on an inner circumference of the conveyor belt 110.

Restated, the conveyor apparatus 100 includes the conveyor belt 110, the drive sprocket 120, the driven sprockets 130, 130..., a tensioner 140, a roller 150, the uplift-preventing guide rail 160, and a convexly curved guide 170.

With regard to these elements, the drive sprocket 120 is rotationally driven by a not-shown motor in a counterclockwise direction in the figures so as to move the conveyor belt 110 in the direction indicated by an arrow such that the conveyor belt 110 travels from a conveyance side A to a return side B where the conveyor belt 110 returns to a conveyance start position without conveying the conveyed article thereon, and again from this return side B to the conveyance side A.

It should be noted here that the conveyance side A refers to a range of the conveyor belt 110 in the circulation route where the conveyor belt 110 travels in a direction in which the conveyed article is to be conveyed from the conveyance start position to the conveyance end position, while the return side B refers to another range of the conveyor belt 110 in which the conveyor belt 110 travels in a direction in which the conveyor belt 110 returns from the conveyance end position back to the conveyance start position.

Also, the driven sprockets 130, 130... are drivenly rotated so as to make the conveyor belt 110 move forward.

Further, the tensioner 140 is provided to exert a predetermined tensile force upon the conveyor belt 110 by a not-shown biasing unit.

Also, the roller 150 is configured to be drivenly rotationally in contact with the surface of the outer circumference of the conveyor belt 110 to ensure an amount of wrapping of the conveyor belt 110 around the drive sprocket 120.

Further, the uplift-preventing guide rail 160 is formed in the conveyance side A of the apparatus such that the guide rail 160 takes a concavely curved shape when viewed from its side, the guide rail 160 being adapted to be brought into engagement with the guide-engaging section 112d (see FIGS. 2-5B) of the modular link 112 of the conveyor belt 110 so as to resist the tensile force of the conveyor belt 110 and thereby prevent uplifting of the conveyor belt 110 on the conveyance side A in the range of the concavely curved shape.

Also, the convexly curved guide 170 is formed in the conveyance side A such that the guide 170 takes a convexly curved shape when viewed from its side, the guide 170 being adapted to guide the conveyor belt 110 that is pressed against the guide 170 due to the tensile force of the conveyor belt 110.

The conveyor belt 110 of the conveyor apparatus 100 according to the exemplary embodiment of the invention will now be described in detail.

Referring to FIG. 2, the conveyor belt 110 of the conveyor apparatus 100 according to the exemplary embodiment of the invention includes multiple modular links (111A to 111C, 112) arranged in an endless manner and interconnected to each other using a connecting pin 113 in the belt longitudinal direction to configure the outer circumference of the conveyor belt 110 upon which the conveyed articles are placed and conveyed, the modular links being made of synthetic resin and each including a plurality of hinge sections 111b, 111b... each having an insertion hole 111ba for insertion of the connecting pin 113, the hinge sections 111b, 111b... being provided in the belt width direction and arranged in a staggered pattern at both a leading end and a trailing end of the link. It should be noted that the hinge sections 111b, 111b...serve as the boss sections, and the insertion hole 111ba as the insertion hole for insertion of the connecting pin in the context of the invention for which the protection is sought.

Restated, the conveyor belt 110 includes the modular link (111A to 111C, 112) and the connecting pin 113, and there are provided two types of the modular links (111 A to 111C, 112), i.e., the modular links 111A to 111C that have no guide-engaging section and the modular link 112 that has the guide-engaging section.

With regard to these elements, the modular link 111A without the guide-engaging section is integrally formed from one end to the other end across a full width of the belt, while each of the modular links 111B, 111C without the guide-engaging section is integrally formed by a width shorter by one pitch of the boss section than a half of the full width of the belt, and the modular link 111B without the guide-engaging section constitutes one side with one end in the belt width direction, and the modular link 111C without the guide-engaging section constitutes the other side with the other end in the belt width direction.

It is also contemplated that the modular links 111A to 111C without the guide-engaging section may be made shorter in the belt width direction, i.e., have a length corresponding to one or several pitches of the boss sections.

Also, the hinge sections 111b, 111b... are arranged in the staggered pattern in the belt longitudinal direction at both the leading and trailing ends of the modular links 111A to 111C without the guide-engaging section. The pin insertion hole 111ba into which the connecting pin 113 is inserted is formed in each of the hinge sections 111b,111b....

Likewise, the first hinge section 112b and the second hinge section 112c are arranged in the staggered pattern in the belt width direction at the leading and trailing ends of the modular link 112 with the guide-engaging section in the belt longitudinal direction. A first pin hole 112ba into which the connecting pin 113is inserted is provided in the first hinge section 112b, and a second pin hole 112ca into which the connecting pin 113 is inserted is provided in the second hinge section 112c.

Further, the modular link 112 with the guide-engaging section formed with a length of one pitch of the boss section is arranged between the modular link 111B without the guide-engaging section and the modular link 111C without the guide-engaging section so that the modular link 111B without the guide-engaging section, the modular link 112 with the guide-engaging section and the modular link 111C without the guide-engaging section are interconnected to each other and alternatingly coupled to the modular link 111A without the guide-engaging section in the belt longitudinal direction using the connecting pin 113. Thus the conveyor belt 110 is configured.

The modular link 112 with the guide-engaging section of the conveyor belt 110 of the conveyor apparatus 100 according to the exemplary embodiment of the invention will now be described in more detail.

The conveyor belt 110 according to the exemplary embodiment of the invention includes, as shown in FIGS. 3-5B, the modular link 112 with the guide-engaging section comprising a link base 112A having the conveying surface 112a on the outer circumference of the belt; a guide-engaging section 112d arranged on the inner circumference of the belt with respect to the link base 112A and adapted to be brought into engagement with the uplift-preventing guide rail 160 of the circulation route; the first pin hole 112ba provided in the link base 112A at one end in the belt longitudinal direction and adapted to receive the connecting pin 113 in the belt width direction; and a second pin hole 112ca provided in the link base 112A at the other end in the belt longitudinal direction and adapted to receive the connecting pin 113 in the belt width direction.

More specifically, there are provided two first pin holes 112ba away from each other in the belt width direction, and one second pin hole 112ca residing between the two first pin holes 112ba, 112ba in the belt width direction.

Thus, it is appreciated that the number of substantial links does not decrease, the links comprising the modular links 111A to 111C without the guide-engaging section between the connecting pins 113, 113 and the link base 112A of the modular link 112 with the guide-engaging section.

Further, the portion of the modular link 112 with the guide-engaging section on which the tensile force is exerted is made symmetrical with respect to the belt longitudinal direction.

Also, it is made possible to incorporate the modular link 112 with the guide-engaging section and the modular links 111A to 111C without the guide-engaging section into the conveyor belt in any desired combination.

Restated, the modular link 112 with the guide-engaging section includes the link base 112A, the conveying surface 112a, the first hinge section 112b, the second hinge section 112c, and the uplift-preventing guide guide-engaging section 112d.

Of these elements, the link base 112A defines a substantial link member between the connecting pins 113, 113 as in the case of the modular links 111A to 111C without the guide-engaging section, and includes the conveying surface 112a on the outer circumference.

Further, there are provided two first hinge sections 112b at one end in the belt longitudinal direction, and the first hinge section 112b includes the first pin hole 112ba into which the connecting pin 113 is inserted.

Also, there is provided one second hinge section 112c at the side of the other end in the belt longitudinal direction between the two first hinge sections 112b, 112b in the belt width direction, and the second pin hole 112ca into which the connecting pin 113 is inserted is provided in the second hinge section 112c.

Referring further to FIGS. 4B-4D, a sum of cross-sectional areas S1, S2 of the second hinge section 112c providing the second pin hole 112ca viewed in the belt longitudinal direction is made equal to a sum of the cross-sectional areas S3, S4, S5, S6 of the two first hinge sections 112b, 112b each providing the first pin holes 112ba, 112ba, respectively, viewed in the belt longitudinal direction.

Thus, the strength of the first hinge section 112b is made equal to the strength of the second hinge section 112c.

It is assumed here that the portion that is the second hinge section 112c (the range of cross-sectional areas S1, S2) of the shaded cross section in FIG. 4C has a significant impact on the belt strength, and that the potion T1 that is not the second hinge section 112c does not significantly affect the belt strength.

Referring further to FIGS. 5A to 5D, a cross-sectional area S7 of the link base 112A viewed in the belt longitudinal direction between the first pin hole 112ba and the second pin hole 112ca is made equal to a cross-sectional area S8 of a portion of the modular links 111A to 111C without the guide-engaging section viewed in the belt longitudinal direction, the portion being defined such that the portion has the same width as that of the link base 112A.

Thus, the tensile strength between the first hinge section 112b and the second hinge section 112c in the modular link 112 with the guide-engaging section is made substantially equal to the tensile strength of the corresponding portion between the hinge sections 111b, 111b of the modular links 111A to 111C without the guide-engaging section, the corresponding portion having the same width as that of the link base 112A.

It is assumed here that the portion that is the link base 112A (the range of the cross-sectional area S7) of the shaded cross section in FIG. 5B has a significant impact on the belt strength, and that the potion T2 that is not the link base 112A does not significantly affect the belt strength.

The conveyor belt 110 thus obtained according to an embodiment of the invention includes the two types of the modular links (111A to 111C, 112), i.e., the modular links 111A to 111C without the guide-engaging section including the conveying surface 111a on the outer circumference of the belt and the modular link 112 with the guide-engaging section including the conveying surface 112a on the outer circumference and arranged between the modular links 111B, 111C without guide-engaging section in the belt width direction.

The modular link 112 with the guide-engaging section includes the link base 112A having the conveying surface 112a; the uplift-preventing guide guide-engaging section 112d arranged in the link base 112A in the inner circumference of the belt and adapted to be brought into engagement with the uplift-preventing guide rail 160 of the circulation route; the first pin hole 112ba provided at the one end of the link base 112A in the belt longitudinal direction and adapted to receive the connecting pin 113 therein in the belt width direction; and the second pin hole 112ca provided at the other end of the link base 112A in the belt longitudinal direction and adapted to receive the connecting pin 113 therein in the belt width direction.

There are provided two first pin holes 112ba provided away from each other in the belt width direction, and there is provided one second pin hole 112ca at a position between the two first pin holes 112ba, 112ba in the belt width direction.

Thus, it is made possible to prevent decrease in a tensile strength of the entire conveyor belt 110 and deformation of the modular link 112 with the guide-engaging section in the belt width direction. Further, it is made possible to readily incorporate the modular link 112 with the guide-engaging section into the conveyor belt at a desired position and in a desired combination.

Further, since the cross-sectional area of the second hinge section 112c providing the second pin hole 112ca viewed in the belt longitudinal direction is made equal to the sum of the cross-sectional areas of the two first hinge section 112b, 112b each providing the first pin hole 112ba, 112ba viewed in the belt longitudinal direction, it is made possible to eliminate unnecessity in the modular link 112 with the guide-engaging section.

Also, since the cross-sectional area of the link base 112A viewed in the belt longitudinal direction between the first pin hole 112ba and the second pin hole 112ca is made equal to the cross-sectional area of the portion of the modular link 111A to 111C without the guide-engaging section viewed in the belt longitudinal direction, the portion having the width identical with that of the cross-sectional area of the link base 112A, it is made possible to eliminate or reduce or unevenness in the tensile strength of the entire conveyor belt 110.

The conveyor apparatus 100 thus obtained in accordance with the exemplary embodiment of the invention includes the two types of the modular links (111A to 111C, 112) comprising the modular links 111A to 111C without the guide-engaging section including the conveying surface 111a on the side of the belt outer circumference and the modular link 112 with the guide-engaging section including the conveying surface 112a on the side of the belt outer circumference and arranged between the modular links 111B, 111C without the guide-engaging section in the belt width direction.

The modular link 112 with the guide-engaging section includes the link base 112A having the conveying surface 112a; the uplift-preventing guide guide-engaging section 112d arranged in the link base 112A at the side of the inner circumference of the belt and adapted to be brought into engagement with the uplift-preventing guide rail 160 of the circulation route; the first pin hole 112ba arranged on the one end side of the link base 112A in the belt longitudinal direction and adapted to receive the connecting pin 113 therein in the belt width direction; and the second pin hole 112ca arranged at the other end side of the link base 112A in the belt longitudinal direction and adapted to receive the connecting pin 113 therein in the belt width direction.

There are provided two first pin holes 112ba arranged away from each other in the belt width direction, and there is provided one second pin hole 112ca at a position between the two first pin holes 112ba, 112ba in the belt width direction.

Thus, it is appreciated that the effects of the invention are very extensive. For example, the invention makes it possible to prevent decrease in the tensile strength of the entire conveyor belt 110 and deformation of the modular link 112 with the guide-engaging section in the belt width direction. Further, it is made possible to readily incorporate the modular link 112 with the guide-engaging section at a desired position and in any desired combination.

### Reference Signs List

- 100: Conveyor apparatus
- 110: Conveyor belt
- 111A-111C: Modular link without a guide-engaging section
- 111a: Conveying surface
- 111b: Hinge section (boss section)
- 111ba: Pin insertion hole
- 112: Modular link with the guide-engaging section
- 112A: Link base
- 112a: Conveying surface
- 112b: First hinge section
- 112ba: First pin hole
- 112c: Second hinge section
- 112ca: Second pin hole
- 112d: Guide-engaging section
- 113: Connecting pin
- 120: Drive sprocket
- 130: Driven sprocket
- 140: Tensioner
- 150: Roller
- 160: Uplift-preventing guide rail
- 170: Convexly curved guide
- 500: (Conventional) conveyor belt
- 510: Tab attachment
- 511: Pin hole
- 512: Engaging section
- A: Conveyance side
- B: Return side

## Claims

1. A conveyor belt (110) comprising multiple modular links arranged in an endless manner in a belt longitudinal direction and interconnected to each other using a connecting pin so as to provide an outer circumference of the conveyor belt (110) upon which a conveyed article is placed and conveyed, the modular links being made of synthetic resin and each including a plurality of boss sections each having an insertion hole adapted for insertion of the connecting pin (113), the boss sections (111b) being provided in a belt width direction and arranged in a staggered pattern at both a leading end and a trailing end of the of the modular links, **characterized in that** the modular links comprising two types of modular links of:
(A) a plurality of modular links (111A-111C) having no guide-engaging section (112d) adapted to be brought into engagement with a guide rail (160) of a circulation route, each including a conveying surface on the outer circumference of the conveyor belt (110), wherein the guide rail (160) is adapted for prevention of uplifting of the conveyor belt; and
(B) a modular link (112) with a guide-engaging section (112d) having the conveying surface (112a) on the outer circumference, and arranged between modular links (111B,111C) without a guide-engaging section in the belt width direction, the modular link (112) with the guide-engaging section comprising:
(a) the link base (112A) having the conveying surface (112a);
(b) the guide-engaging section provided on an inner circumference side of the conveyor belt with respect to the link base (112A) and adapted to be brought into engagement with the guide rail (160) of the circulation route;
(c) two first pin holes (112ba) provided in the link base (112A) at one end thereof in the belt longitudinal direction and adapted to receive the connecting pin (113) in the belt width direction, the two first pin holes (112ba) being provided away from each other in the belt width direction; and
(d) one second pin hole (112ca) provided in the link base (112A) at an other end thereof in the belt longitudinal direction and adapted to receive the connecting pin (113) in the belt width direction, the second pin hole (112ca) being provided at a position between the two first pin holes (112ba) in the belt width direction.

2. The conveyor belt as set forth in claim 1, **characterized in that** a cross-sectional area of a second hinge section (112c) providing the second pin hole (112ca) viewed in the belt longitudinal direction is equal to a sum of cross-sectional areas of two first hinge sections (112b) each providing one of the two first pin holes (112ba) taken in the belt longitudinal direction.

3. The conveyor belt as set forth in claim 1, **characterized in that** a cross-sectional area of the link base (112A) taken in the belt longitudinal direction between the first pin holes (112ba) and the second pin hole (112ca) is equal to a cross-sectional area of a portion of the modular link without the guide-engaging section taken in the belt longitudinal direction, the portion being defined such that the portion has a same width as that of the link base.

## Patentansprüche

1. Förderband (110), umfassend: mehrere modulare Glieder, die endlos in einer Bandlängsrichtung angeordnet sind und miteinander durch Verwenden eines Verbindungsstiftes verbunden sind, um einen Außenumfang des Förderbandes (110) bereitzustellen, auf dem ein beförderter Artikel angeordnet und befördert wird, wobei die modularen Glieder aus synthetischem Harz hergestellt sind und jeweils mehrere ausgewölbte Abschnitte aufweisen, die jeweils ein Einführungsloch zum Einführen des Verbindungsstiftes (113) aufweisen, wobei die ausgewölbten Abschnitte (111b) in einer Bandbreitenrichtung bereitgestellt sind und in einem versetzten Muster sowohl an einem vorderen als auch hinteren Ende der modularen Glieder angeordnet sind, **dadurch gekennzeichnet, dass** die modularen Glieder zwei Arten modularer Glieder umfassen:
(A) mehrere modulare Glieder (111A-111C), die keinen Führungseingriffsabschnitt (112d) aufweisen, die zum Eingriff mit einer Führungsschiene (160) eines Umlaufs ausgelegt sind, wobei jedes eine Förderoberfläche auf dem Außenumfang des Förderbandes (110) aufweist, wobei die Führungsschiene (160) zum Verhindern des Anhebens des Förderbandes ausgelegt ist; und
(B) ein modulares Glied (112) mit einem Führungseingriffsabschnitt (112d), das die Förderfläche (112a) an dem Außenumfang aufweist, zwischen den modularen Gliedern (111B, 111C) ohne den Führungseingriffsabschnitt in Bandbreitenrichtung angeordnet ist, wobei das modulare Glied (112) mit dem Führungseingriffsabschnitt Folgendes umfasst:
(a) die Gliedbasis (112A) mit der Förderfläche (112a) ;
(b) den Führungseingriffsabschnitt, der auf einer inneren Umfangsseite des Förderbandes in Bezug auf die Gliedbasis (112A) bereitgestellt ist und ausgelegt ist, um mit der Führungsschiene (160) des Umlaufs in Eingriff gebracht zu werden;
(c) zwei erste Stiftlöcher (112ba), die in der Gliedbasis (112A) an einem Ende davon in Bandlängsrichtung bereitgestellt sind und zum Aufnehmen des Verbindungsstiftes (113) in Bandbreitenrichtung ausgelegt sind, wobei die zwei ersten Stiftlöcher (112ba) voneinander beabstandet in Bandbreitenrichtung bereitgestellt sind; und
(d) ein zweites Stiftloch (112ca) in der Gliedbasis (112A) an einem anderen Ende davon in Bandlängsrichtung bereitgestellt ist und zum Aufnehmen des Verbindungsstifts (113) in Bandbreitenrichtung ausgelegt ist, wobei das zweite Stiftloch (112ca) an einer Position zwischen den zwei ersten Stiftlöchern (112ba) in Bandbreitenrichtung bereitgestellt ist.

2. Förderband nach Anspruch 1, **dadurch gekennzeichnet, dass** ein Querschnittsbereich eines zweiten Scharnierabschnitts (112c), der das zweite Stiftloch (112ca) in Bandlängsrichtung betrachtet bereitstellt, einer Summe der Querschnittsbereiche der zwei ersten Scharnierabschnitte (112b) entspricht, die jeweils eines der zwei ersten Stiftlöcher (112ba) entlang der Bandlängsrichtung bereitstellen.

3. Förderband nach Anspruch 1, **dadurch gekennzeichnet, dass** ein Querschnittsbereich der Gliedbasis (112A) in Bandlängsrichtung zwischen den ersten Stiftlöchern (112ba) und dem zweiten Stiftloch (112ca) einem Querschnittsbereich eines Abschnitts des modularen Glieds ohne Führungseingriffsabschnitt in Bandlängsrichtung entspricht, wobei der Abschnitt so definiert ist, dass der Abschnitt eine gleiche Breite wie die Gliedbasis aufweist.

## Revendications

1. Bande transporteuse (110) comprenant de multiples chaînons modulaires agencés de façon à former un ensemble sans fin dans le sens longitudinal de la bande et raccordés mutuellement les uns aux autres au moyen d'une cheville de raccordement de manière à réaliser une circonférence extérieure de la bande transporteuse (110) sur laquelle un article transporté est placé et transporté, les chaînons modulaires étant constitués de résine synthétique et comprenant chacun une pluralité de sections à bossage comportant chacune un trou d'insertion conçu en vue de l'insertion de la cheville de raccordement (113), les sections à bossage (111b) étant disposées dans le sens de la largeur de la bande et agencées en quinconce au niveau d'une extrémité avant et d'une extrémité arrière des chaînons modulaires,
**caractérisée en ce que** les chaînons modulaires comprennent deux types de chaînons modulaires :
(A) une pluralité de chaînons modulaires (111A à 111C) ne comportant pas de section coopérant avec le guide (112d) conçue pour être amenée à coopérer avec un rail formant guide (160) d'une voie de circulation, comprenant chacun une surface de transport sur la circonférence extérieure de la bande transporteuse (110), le rail formant guide (160) étant conçu pour empêcher une élévation de la bande transporteuse ; et
(B) un chaînon modulaire (112) comportant une section coopérant avec le guide (112d), dont la surface de transport (112a) se trouve sur la circonférence extérieure, et disposé entre des chaînons modulaires (111B, 111C) ne comportant pas de section coopérant avec le guide dans le sens de la largeur de la bande, le chaînon modulaire (112) comportant la section coopérant avec le guide comprenant :
(a) la base de chaînon (112A) comportant la surface de transport (112a) ;
(b) la section coopérant avec le guide disposée sur un côté de circonférence intérieur de la bande transporteuse par rapport à la base de chaînon (112A) et conçue pour être amenée à coopérer avec le rail formant guide (160) de la voie de circulation ;
(c) deux premiers trous de cheville (112ba) formés dans la base de chaînon (112A) à une extrémité de celle-ci dans le sens longitudinal de la bande et conçus pour recevoir la cheville de raccordement (113) dans le sens de la largeur de la bande, les deux premiers trous de cheville (112ba) étant situés à l'écart l'un de l'autre dans le sens de la largeur de la bande ; et
(d) un deuxième trou de cheville (112ca) formé dans la base de chaînon (112A) à une autre extrémité de celle-ci dans le sens longitudinal de la bande et conçu pour recevoir la cheville de raccordement (113) dans le sens de la largeur de la bande, le deuxième trou de cheville (112ca) étant situé à une position se trouvant entre les deux premiers trous de cheville (112ba) dans le sens de la largeur de la bande.

2. Bande transporteuse selon la revendication 1, **caractérisée en ce qu'**une surface en coupe transversale d'une deuxième section de charnière (112c) formant le deuxième trou de cheville (112ca), observée dans le sens longitudinal de la bande, est égale à la somme des surfaces en coupe transversale de deux premières sections de charnière (112b) formant chacune l'un des deux premiers trous de cheville (112ba), prises dans le sens longitudinal de la bande.

3. Bande transporteuse selon la revendication 1, **caractérisée en ce qu'**une surface en coupe transversale de la base de chaînon (112A) prise dans le sens longitudinal de la bande entre les premiers trous de cheville (112ba) et le deuxième trou de cheville (112ca) est égale à une surface en coupe transversale d'une partie du chaînon modulaire ne comportant pas de section coopérant avec le guide prise dans le sens longitudinal de la bande, la partie étant définie de telle sorte qu'elle présente une largeur identique à celle de la base de chaînon.
